(19)

Europäisches
Patentamt
European
Patent Office
Office européen
des brevets

(11) **EP 2 328 065 A1**

(12) **EUROPEAN PATENT APPLICATION**

(43) Date of publication:
**01.06.2011 Bulletin 2011/22**

(21) Application number: **09177523.9**

(22) Date of filing: **30.11.2009**

(51) Int Cl.:
**G06F 3/041** *(2006.01)*        **G06F 3/01** *(2006.01)*
**G06F 3/048** *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **RESEARCH IN MOTION LIMITED Waterloo, Ontario N2L 3W8 (CA)**

(72) Inventor: **Faubert, Perry, Allan Kitchener Ontario N2A 4M1 (CA)**

(74) Representative: **Reichl, Wolfgang MERH-IP Matias Erny Reichl Hoffmann Paul-Heyse-Straße 29 80336 München (DE)**

Remarks:
Amended claims in accordance with Rule 137(2) EPC.

(54)    **Electronic device and method of controlling same**

(57)    A method of controlling an electronic device includes displaying a feature on a touch-sensitive display of a portable electronic device, detecting a touch at a first location on the touch-sensitive display, and modifying a first force on the touch-sensitive display when the location of the touch is associated with the feature.

FIG. 5

EP 2 328 065 A1

## Description

### FIELD OF TECHNOLOGY

The present disclosure relates to electronic devices, including but not limited to portable electronic devices having touch screen displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size.

Improvements in devices with touch-sensitive displays are desirable.

### SUMMARY

A method of controlling an electronic device includes displaying a feature on a touch-sensitive display of a portable electronic device, detecting a touch at a first location on the touch-sensitive display, and modifying a first force on the touch-sensitive display when the first location is associated with the feature.

A computer-readable medium has computer-readable code embodied therein. The computer-readable code is executable by at least one processor of an electronic device to perform the above method.

An electronic device includes a base, a touch-sensitive display that is moveable relative to the base, an actuator operable to move the touch-sensitive display, and a processor. The processor is configured to control the actuator to modify a first force on the touch-sensitive display when a detected touch is at a location associated with a feature.

### BRIEF DESCRIPTION OF THE DRAWINGS

FIG. 1 is a block diagram of a portable electronic device in accordance with the disclosure.

FIG. 2 is a front view of an example of a portable electronic device in accordance with the disclosure.

FIG. 3A is a sectional side view of the portable electronic device, through line 208 of FIG 2, in accordance with the disclosure.

FIG. 3B is a sectional side view of the portable electronic device, through line 208 of FIG 2, in accordance with the disclosure.

FIG. 4 is a functional block diagram showing the actuator of the portable electronic device in accordance with the disclosure.

FIG. 5 is a flowchart illustrating a method of controlling an electronic device in accordance with the disclosure.

FIG. 6A is an example of a touch-sensitive display illustrating a touch location in accordance with the disclosure.

FIG. 6B is an example of a graph of voltage across a piezoelectric actuator for the touch of

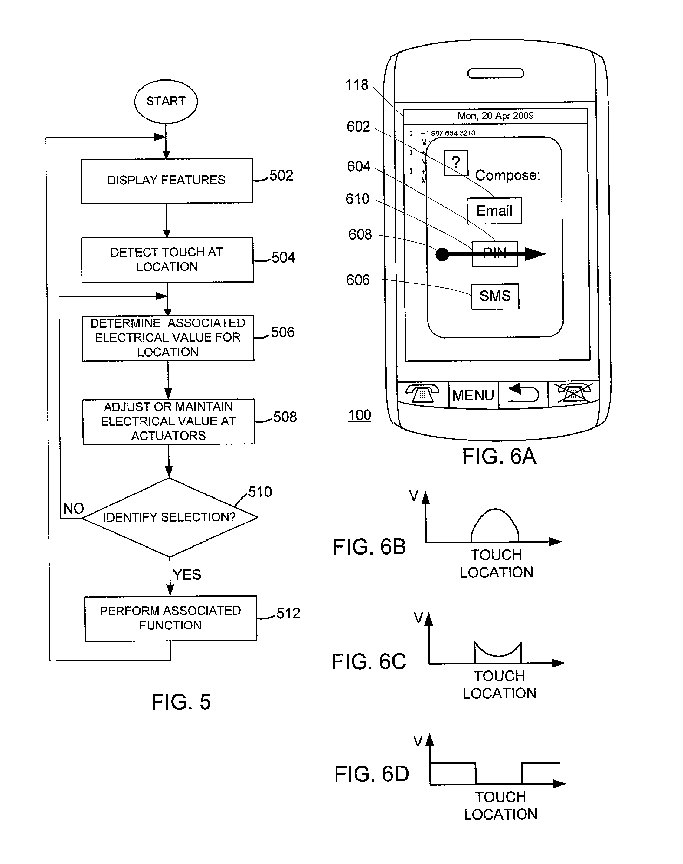

FIG. 6A in accordance with the disclosure.

FIG. 6C is another example of a graph of voltage across a piezoelectric device for a touch in accordance with the disclosure.

FIG. 6D is another example of a graph of voltage across a piezoelectric device for a touch in accordance with the disclosure.

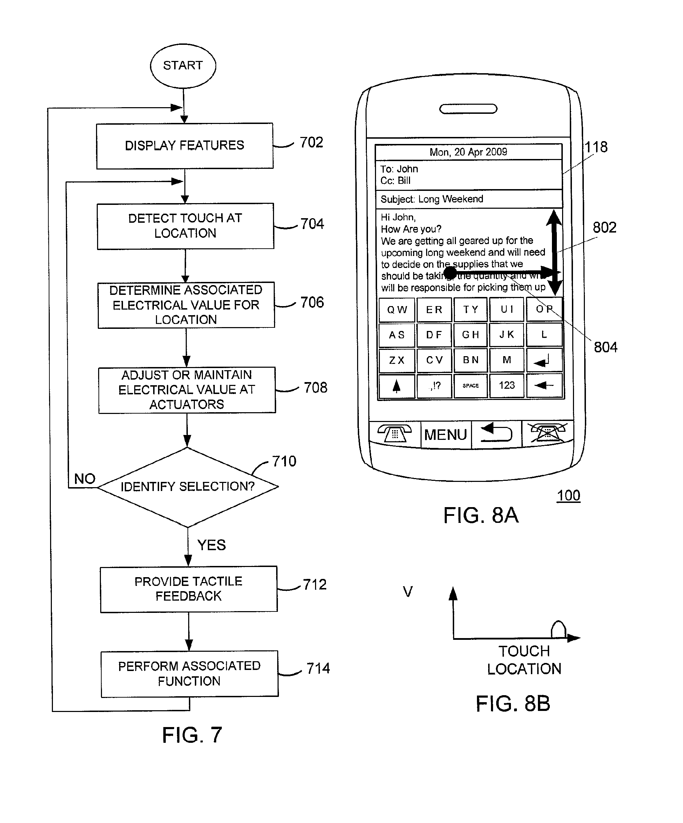

FIG. 7 is a flowchart illustrating another method of controlling an electronic device in accordance with the disclosure.

FIG. 8A is an example of a touch-sensitive display illustrating a touch.

FIG. 8B is an example of a graph of voltage across a piezoelectric device for a touch in accordance with the disclosure.

### DETAILED DESCRIPTION

The following describes an apparatus for and method of controlling an electronic device. A feature is displayed on a touch-sensitive display of a portable electronic device and a touch is detected at a first location on the touch-sensitive display. A force, on the touch-sensitive display, is modified when the first location is associated with the feature.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, and so forth. The portable electronic device may also be a portable electronic device without wireless communication capabilities, such as a handheld electronic game device, digital photograph album, digital camera, or other device.

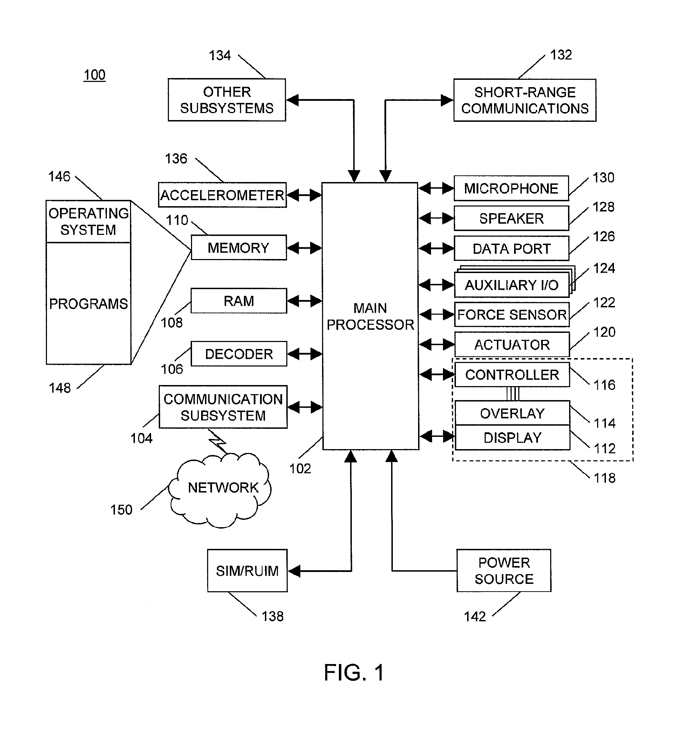

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably connected to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Location data may include an area of contact or a single point of contact, such as a point at or near a center of the area of contact. The location of a detected touch may include x and y components, e.g., horizontal and vertical components, respectively, with respect to one's view of the touch-sensitive display 118. For example, the x location component may be determined by a signal generated from one touch sensor, and the y location component may be determined by a signal generated from another touch sensor. A signal is provided to the controller 116 in response to detection of a touch. A touch may be detected from any suitable object, such as a finger, thumb, appendage, or other items, for example, a stylus, pen, or other pointer, depending on the nature of the touch-sensitive display 118. Multiple simultaneous touches may be detected.

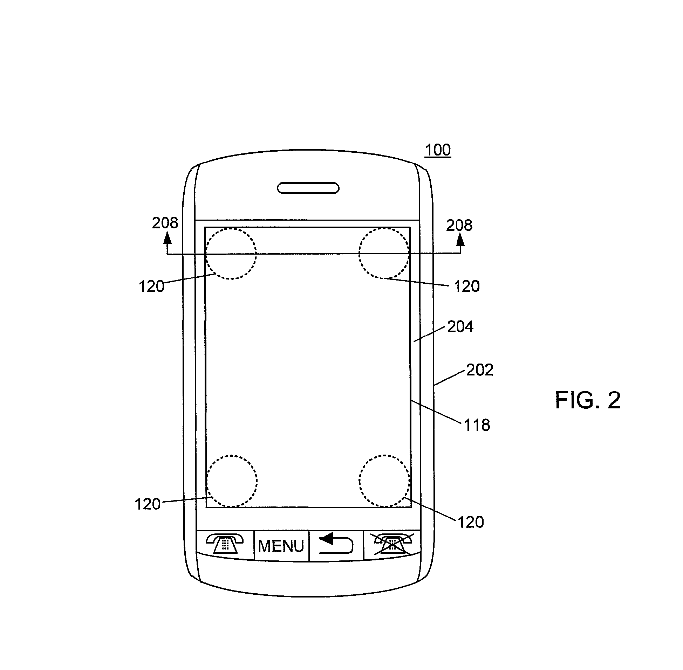

A front view of a portable electronic device 100 is shown in FIG. 2. The portable electronic device 100 includes a housing 202 that is suitable for enclosing the components shown in FIG. 1. The housing includes a frame 204 around the touch-sensitive display 118. In the example shown in FIG. 2, the actuator 120 comprises four piezoelectric (piezo) actuators 120, each located near a corner of the touch-sensitive display 118.

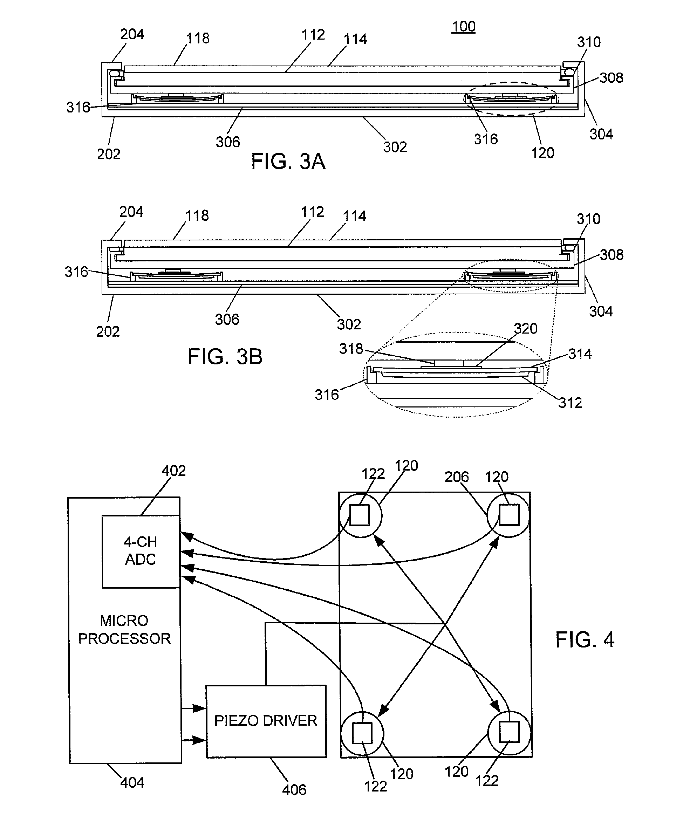

Sectional side views of the portable electronic device 100, through the line 208 of FIG 2, are shown in FIG. 3A and FIG. 3B. The housing 202 also includes a back 302 and sidewalls 304 that extend between the back 302 and the frame 204. A base 306 is spaced from and is generally parallel to the back 302. The base 306 may be any suitable base such as a printed circuit board or circuit board supported by one or more supports between the base 306 and the back 302. The display 112 and the touch-sensitive overlay 114 are supported on a support tray 308 of suitable material, such as magnesium. A compliant gasket 310 is located between the support tray 308 and the frame 204 to protect the components within the housing 202 of the portable electronic device 100. A suitable material for the compliant gasket 310 includes, for example, a cellular urethane foam with a suitable fatigue life. The compliant gasket 310 may absorb shock and dampen vibration.

Each piezo actuator 120 includes a piezoelectric device 312, such as a piezoelectric ceramic disk, adhered to a substrate 314 of larger diameter than the piezoelectric device 312. The substrate 314 may be comprised of metal, plastic, and/or any elastically flexible material. Each piezo actuator 120 is supported on a respective support ring 316 that extends from the base 306 toward the touch-sensitive display 118, such that the edge of the substrate 314 contacts the support ring 316 to facilitate flexing of the piezo actuator 120. An element 210 that is advantageously at least partially flexible and comprises, for example, silicone or hard rubber, may be located between the piezo device 312 and the touch-sensitive display 118. The element 210 does not substantially dampen the force applied to or on the touch-sensitive display 118. The force sensors 122 comprise four force sensors 122, and each force sensor 122 is located between a respective element 318 and the substrate 314.

The touch-sensitive display 118 is moveable toward the base 306. As shown in FIG. 3A, a force applied to the touch-sensitive display 118 is transferred to the piezo actuators 120. The touch-sensitive display 118 is also moveable away from the base 306, as shown in FIG. 3B, when the sufficient charge/voltage across the piezoelectric devices 312 causes the piezoelectric devices 312 to shrink diametrically and causes the substrates 314 and piezoelectric devices 312 to flex. The charge/voltage of the piezoelectric devices 312 may be adjusted to control the force applied by the piezo actuators 120 on the support tray 308, and thus the touch-sensitive display 118, to control the resulting movement of the touch-sensitive display 118. The charge may be adjusted by varying the voltage or current to the piezo devices 312. For example, a current may be applied to increase the charge of the piezoelectric devices 312 to increase the force applied by the piezo actuators 120 on the touch-sensitive display 118. The charge on the piezoelectric devices 312 may be removed by a controlled discharge current to decrease the force applied by the piezo actuators 120 on the touch-sensitive display 118.

A functional block diagram of the force sensors 122 and the piezo actuators 120 is shown in FIG. 4. In this example, each force sensor 122 is connected to a four-channel amplifier and analog-to-digital converter (ADC) 402 that is integrated into a microprocessor 404. The piezoelectric devices 312 are operably connected to a piezo driver 406 that communicates with the microprocessor 404. The microprocessor 404 is also in communication with, or may be part of, the main processor 102 of the portable electronic device 100. The microprocessor 404 receives and provides signals to the main processor 102 of the portable electronic device 100. The force sensors 122 may act as force sensing resistors in an electrical circuit, where the resistance changes in accord with the force applied to the sensor. As applied force increases, the resistance decreases. A signal conditioning circuit (not shown) converts the resistance change to a voltage change and is measured via the analog-to-digital converter 402 to determine the value of the force applied to the touch-sensitive display 118.

The mechanical work performed by the actuators 120 may be controlled to provide generally consistent force on, and movement of, the touch-sensitive display 118 in response to detection of a touch. Fluctuations in mechanical work performed, for example, as a result of temperature variation, are reduced by adjusting the current to control the charge. Each piezoelectric device 312 has similar electrical properties to a capacitor. The mechanical work performed (force multiplied by displacement) by the piezo actuators 120 is controlled by controlling the charge, expressed as:

$$Q_{piezo} = C_{piezo}V_{piezo}$$

where Q is charge, C is capacitance, and V is voltage.

A coefficient, referred to as the $d_{31}$ coefficient, of a piezoelectric material, provides a relationship between voltage and force. The $d_{31}$ coefficient and the relative dielectric constant, Er, of a given piezoelectric material vary inversely with temperature. When the charge of the piezoelectric devices 312 is controlled within a small range, the variance of the mechanical work of the piezo actuators 120 is small. The current may be controlled in the same way as the current flowing in or out of a capacitor may be controlled. The current is given by:

$$I = C \, (dV/dt)$$

where I is current, C is capacitance, and dV/dt is differential voltage or instantaneous rate of voltage change.

The microprocessor 404 controls the piezo driver 406 that controls the electrical value, such as current, voltage, charge, of the piezoelectric devices 312. In the present example, each of the piezoelectric devices 312 are operably coupled to the microprocessor 404 through the piezo driver 406 and are all controlled substantially equally and concurrently. Optionally, the piezoelectric devices 312 may be controlled separately.

The touch-sensitive display 118 is also configured to display representations of features such as buttons, keys, scroll bars, icons, direction arrows, cursors, and so forth. Each application typically includes at least one map of locations with an associated charge for each piezo actuator 120 to vary the force on the touch-sensitive display 118 and to vary the distance of the touch-sensitive display 118 from the base 306 depending on the location of the touch. The piezo actuators 120 provide a spring-like force on the touch-sensitive display 118 and the movement of the touch-sensitive display 118 may be affected by the applied force by the user. The movement of the touch-sensitive display 118 and the distance may vary, even with constant force applied by the piezo actuators 120 on the touch-sensitive display 118.

A flowchart illustrating a method of controlling an electronic device, that has a touch-sensitive display 118, is shown in FIG. 5. The method is advantageously performed by the processor 102 in conjunction with the microprocessor 404, performing stored instructions from a computer-readable medium. Coding of software for carrying out such a method is within the scope of a person of ordinary skill in the art given the present description. The features are displayed 502 on the touch-sensitive display 118 of the portable electronic device 100. The features may be keys of any type of keyboard, virtual buttons, scroll bars, slider selectors, selectable check boxes, icons, direction arrows, cursors, location indicators and so forth. When a touch is detected 504, the location of the touch on the touch-sensitive display 118 is determined and an electrical value of the piezo actuators 120 is determined 506. The electrical value may be, for example, a voltage, current, or charge associated with the piezo actuators 120. The electrical value of the piezoelectric devices 312 is adjusted 508 to provide tactile feedback. The electrical value, e.g., voltage/current/charge, is based on the touch location and may be determined utilizing, for example, a look-up table or utilizing any other suitable method of associating the electrical value with locations on the touch-sensitive display 118. The electrical value is utilized to change the distance of the touch-sensitive display 118 from the base 306 of the portable electronic device 100 by changing the force applied by the piezo actuators 120 on the touch-sensitive display 118, for example, as a touch moves from a location that is not associated with a feature to a location that is associated with a feature, thereby providing tactile feedback. Similarly, tactile feedback may be provided or change as the touch moves from a location that is associated with a feature to a location that is not associated with a feature. Thus, tactile feedback may be provided when a touch moves across an edge of an area associated with a displayed feature, for example, to simulate an edge of a physical feature. Tactile feedback may also be provided as a touch moves over an area associated with a feature on the touch-sensitive display 118 as the distance of the touch-sensitive display 118 from the base 306 may be changed to simulate a contoured surface. Other shapes or features may be provided as tactile feedback, such as triangles, spikes, and so forth, and the tactile feedback may including vibration. When a selection is identified 510, the associated function is performed 512.

An example of the touch-sensitive display 118 illustrating a touch location is shown in FIG. 6A. For the purpose of this example, three features in the form of virtual buttons are displayed in a message application selection interface. These virtual buttons include an "Email" button 602, a "PIN" button 604, and an "SMS" button 606. A touch 608 on the touch-sensitive display 118 is detected, and the location of the touch is determined. The associated charge for each of the piezoelectric devices 312 is determined to be zero in this example, and the charge at each of the piezoelectric devices 312 is maintained at zero. The touch-sensitive display 118 is therefore maintained in a rest or default position.

In this example, the touch is moved, for example, by the user dragging a finger or other appendage across the touch-sensitive display 118 from the touch location 608 in the direction depicted by the arrow 610, while maintaining the touch continuously. As the touch moves across the touch-sensitive display 118, the portable electronic device 100 continues to determine the location of the touch and maintains or adjusts the charge of each of the piezo devices 312 based on the location, thereby modifying a force applied to the touch-sensitive display 118 by the piezo devices 312. When the touch is located at the edge of the "PIN" button 604, the voltage/charge, is increased rapidly causing the touch-sensitive display 118 to move away from the base 306, for example, by about 50μm. As the touch continues to move, the voltage at the piezoelectric devices 312 continues to increase to a maximum at the center of the "PIN" button 604, thereby moving the touch-sensitive display 118 away from the base 306, for example, about 100μm in

total from the rest position. The voltage decreases as the touch moves from the center of the "PIN" button 604 to the edge of the "PIN" button 604, to facilitate movement of the touch-sensitive display 118 back toward the base 306, for example, by about 50μm. When the touch moves past the edge of the "PIN" button 604, the voltage decreases rapidly to zero to facilitate movement of the touch-sensitive display 118 back to a default or rest position. Thus, modifying the distance of the touch-sensitive display 118 from the base 306 may simulate the feel of a curved or domed surface of a button and provide feedback based on location, for example, as shown in FIG. 6B. In this example, the edges of the displayed feature, e.g., the box around the "PIN" button, are correlated with the signal of FIG. 6B. For example, the touch of the left edge of the "PIN" button may be correlated with the increase in the voltage shown in the voltage curve in 6B, and the right edge of the "PIN" button may be correlated with the decrease in voltage shown in the voltage curve in 6B. A slight delay may occur before the tactile feedback is applied to the touch-sensitive display 118. Thus, a feature may be located based on tactile feedback that causes movement of the touch-sensitive display 118. Although specific distances of movement of the touch-sensitive display 118 are provided in the above examples, other distances may be successfully utilized.

Graphs of voltage across one of the piezoelectric devices 312 and associated with the touch locations for providing alternative feedback, are shown in FIG. 6C and FIG. 6D. In the example shown in FIG. 6C, the voltage is increased rapidly when the touch is located at the edge of the "PIN" button 604. As the touch continues to move, the voltage at the piezoelectric devices 312 decreases until the center of the "PIN" button 604. The voltage then increases as the touch moves from the center of the "PIN" button 604 to an edge of the "PIN" button 604. When the touch moves past the edge of the "PIN" button 604, the voltage decreases rapidly to zero again.

In the example shown in FIG. 6D, the voltage is maintained constant until the touch is located at the edge of the "PIN" button 604, where the voltage is decreased rapidly. As the touch continues to move across the "PIN" button 604 to an edge of the "PIN" button 604, the voltage at the piezoelectric devices 312 is maintained constant. When the touch moves past the edge of the "PIN" button 604, the voltage is increased rapidly. An inverse of this waveform may also be applied, e.g., 0 V until the first edge, a constant high voltage across the feature and dropping back to 0V after the second edge.

In each of the examples shown in FIG. 6B, FIG. 6C, and FIG. 6D, feedback is provided based on the location of a touch to facilitate selection of features on the touch-sensitive display 118. FIG. 6B, FIG. 6C, and FIG. 6D are provided for the purpose of providing examples only and the present disclosure is not intended to be restricted to these examples. Other voltage profiles or waveforms may be successfully utilized.

A flowchart illustrating another method of controlling an electronic device, that has a touch-sensitive display 118, is shown in FIG. 7. The method is advantageously performed by the processor 102 in communication with the microprocessor 404, performing stored instructions from a computer-readable medium. Coding of software for carrying out such a method is within the scope of a person of ordinary skill in the art given the present description. The method of FIG. 7 is similar to the method shown and described with reference to FIG. 5 with the exception that when a selection is identified 710, tactile feedback is provided by further varying the charge at the piezoelectric devices 312. The charge may be varied, for example, to simulate actuation of a dome switch by applying a discharge current, to remove a charge over a very short period of time to mimic actuation of a dome switch. Optionally, a selection may be received when an applied force by the touch exceeds a threshold force or when the touch ends.

Another example of the touch-sensitive display 118 illustrating a touch and an associated graph of voltage across one of the piezoelectric devices 312 versus location of touch is shown in FIG. 8A and FIG. 8B. For the purpose of this example, a feature in the form of a scroll bar 802 is displayed in a message composition interface. When the touch is moved across the touch-sensitive display 118 in the direction of the arrow 804, while maintaining the touch, the portable electronic device 100 repeatedly detects the location of the touch and maintains or adjusts the charge at each of the piezoelectric devices 312 based on the location of the touch. When the touch moves past the edge of the scroll bar 802, the voltage, and thus the charge, is increased rapidly to increase the force applied by the piezo actuators 120 on the touch-sensitive display 118 and facilitate movement of the touch-sensitive display 118 away from the base 306. As the touch continues to move, the voltage at the piezoelectric devices 312 continues to increase to a maximum when the touch is located at the center of the scroll bar 802. The voltage then decreases when the touch moves from the center of the scroll bar 802 to the edge of the scroll bar 802. When the touch moves past the edge of the scroll bar 802, the voltage decreases rapidly to zero again.

Although not shown in FIG. 5 or FIG. 7, the change force on the touch-sensitive display, based on location of touch, may be dependent on the speed or rate of movement of the touch. For example, the charge/voltage of the actuators 120 may not be adjusted when the rate of movement of the touch exceeds a predetermined threshold. Limiting the adjustment of charge to movement that falls below a threshold rate advantageously inhibits excessive noise from rapid movement of the actuators 120 and/or problems relating to delay in response time.

The distance of the touch-sensitive display 118 from the base 306, or another component in fixed relation to the base, may be modified to provide a tactile feedback when moving a finger or other appendage over the touch-sensitive display 118. For example, the distance between the touch-sensitive display and the base 306 may be varied to provide tactile feedback for virtual buttons, keys, scroll bars, slider selectors, selectable check boxes, icons, direction arrows, cursors, location indicators, and so forth. The tactile feedback may be provided to simulate, for example, a bump or raised portion on the numeral 5 of a numerical keypad, or other displayed features utilizing a relatively rigid touch-sensitive display 118 such as described above. This provision of tactile feedback facilitates location of displayed features, decreasing the chance of errors, and decreasing the time for user-interaction. Further, features may be made smaller while still being accurately detected and selected by the user, permitting further information to be displayed on the touch-sensitive display 118. Decreased power consumption results in addition to reduced time between battery charging.

The present disclosure may be embodied in other specific forms without departing from its spirit or essential characteristics. The described embodiments are to be considered in all respects only as illustrative and not restrictive. The scope of the present disclosure is, therefore, indicated by the appended claims rather than by the foregoing description. All changes that come within the meaning and range of equivalency of the claims are to be embraced within their scope.

**Claims**

1. A method comprising:

    displaying a feature on a touch-sensitive display of a portable electronic device;
    detecting a touch at a first location on the touch-sensitive display; and
    modifying a first force on the touch-sensitive display when the first location is associated with the feature.

2. The method according to claim 1, wherein modifying the force comprises controlling an actuator based on the first location.

3. The method according to claim 1 or 2, wherein modifying a force comprises controlling a charge at a piezo actuator.

4. The method according to any preceding claim, comprising determining an electrical value associated with the touch prior to modifying the force.

5. The method according to any preceding claim, wherein modifying the force comprises modifying an electrical value to modify the force.

6. The method according to claim 5, wherein the electrical value comprises a voltage or current applied to an actuator.

7. The method according to any preceding claim, comprising detecting movement of the touch to a second location and modifying the force on the touch-sensitive display.

8. The method according to any preceding claim, wherein modifying a force comprises moving the touch-sensitive display by a distance related to a base of the portable electronic device.

9. The method according to any preceding claim, wherein, when the touch moves from the first location that is not associated with the feature to a second location that is associated with the feature, changing from the first force to a second force.

10. The method according to claim 9, wherein the second force is greater than the first force.

11. The method according to any preceding claim, wherein, when the touch moves from a first location corresponding to an edge of a feature to a second location corresponding to a middle of the feature, the method comprises increasing the force.

12. The method according to any preceding claim, comprising providing a tactile feedback in response to selection of the selectable feature.

13. The method according to claim 12, wherein the tactile feedback comprises simulation of actuation of a switch.

14. A computer-readable medium having computer-readable code embodied therein, the computer-readable code executable by at least one processor of an electronic device to perform the method according to any one of claims 1 to 13.

15. An electronic device comprising:

    a base;
    a touch-sensitive display moveable relative to the base;
    an actuator operable to move the touch-sensitive display; and
    a processor configured to control the actuator to modify a force on the touch-sensitive display when a detected touch is at a location associated with a feature displayed on the touch-sensitive display.

**Amended claims in accordance with Rule 137(2) EPC.**

**1.** A method comprising:

displaying a feature on a touch-sensitive display (118) of a portable electronic device (100);
detecting a touch at a first location associated with the feature;
determining an electrical value associated with the first location;
varying, utilizing the electrical value, a force applied by the actuator (120) on the touch-sensitive display (118).

**2.** The method according to claim 1, wherein the electrical value is varied as the touch changes location on the touch-sensitive display.

**3.** The method according to claim 1, wherein modifying a force comprises controlling a charge at a piezo actuator.

**4.** The method according to claim 1 or 2, wherein the electrical value comprises a voltage or current applied to the actuator (120).

**5.** The method according to any preceding claim, comprising detecting movement of the touch to a second location, determining an electrical value of an actuator (120) in response to detecting the touch at the second location, which electrical value is associated with the second location, and modifying the force applied by the actuator (120) on the touch-sensitive display (118), utilizing the determined electrical value, when the second location is associated with the feature.

**6.** The method according to any preceding claim, wherein modifying a force comprises moving the touch-sensitive display (118) by a distance related to a base (306) of the portable electronic device (100).

**7.** The method according to any preceding claim, wherein, when the touch moves from the first location that is not associated with the feature to a second location that is associated with the feature, changing from the first force to a second force.

**8.** The method according to claim 7, wherein the second force is greater than the first force.

**9.** The method according to claim 1, wherein, when the touch moves from a first location corresponding to an edge of a feature to a second location corresponding to a middle of the feature, the method comprises increasing the force.

**10.** The method according to claim 1, comprising providing a tactile feedback in response to selection of the feature.

**11.** The method according to claim 10, wherein the tactile feedback comprises simulation of actuation of a switch.

**12.** A computer-readable medium having computer-readable code embodied therein, the computer-readable code executable by at least one processor (102) of an electronic device (100) to perform the method according to any one of claims 1 to 11.

**13.** An electronic device (100) comprising:

a base (306);
a touch-sensitive display (118) moveable relative to the base (306);
an actuator (120) operable to move the touch-sensitive display (118); and
a processor (102) configured to display a feature on a touch-sensitive display (118) of a portable electronic device (100), detect a touch at a first location associated with the feature; determine an electrical value associated with the first location, and vary, utilizing the electrical value, a force applied by the actuator (120) on the touch-sensitive display.

<u>100</u>

134 — OTHER SUBSYSTEMS

132 — SHORT-RANGE COMMUNICATIONS

136 — ACCELEROMETER

146 — OPERATING SYSTEM

148 — PROGRAMS

110 — MEMORY

108 — RAM

106 — DECODER

104 — COMMUNICATION SUBSYSTEM

150 — NETWORK

102 — MAIN PROCESSOR

130 — MICROPHONE

128 — SPEAKER

126 — DATA PORT

124 — AUXILIARY I/O

122 — FORCE SENSOR

120 — ACTUATOR

116 — CONTROLLER

114 — OVERLAY

112 — DISPLAY

118

138 — SIM/RUIM

142 — POWER SOURCE

FIG. 1

FIG. 2

FIG. 3A

FIG. 3B

FIG. 4

START

DISPLAY FEATURES —502

DETECT TOUCH AT LOCATION —504

DETERMINE ASSOCIATED ELECTRICAL VALUE FOR LOCATION —506

ADJUST OR MAINTAIN ELECTRICAL VALUE AT ACTUATORS —508

IDENTIFY SELECTION? —510

NO

YES

PERFORM ASSOCIATED FUNCTION —512

FIG. 5

118
602
604
610
608
606

Mon, 20 Apr 2009

+1 987 654 3210
Mi
+
M
+
M

?  Compose:

Email

PIN

SMS

100

FIG. 6A

V

TOUCH LOCATION

FIG. 6B

V

TOUCH LOCATION

FIG. 6C

V

TOUCH LOCATION

FIG. 6D

12

START

DISPLAY FEATURES — 702

DETECT TOUCH AT LOCATION — 704

DETERMINE ASSOCIATED ELECTRICAL VALUE FOR LOCATION — 706

ADJUST OR MAINTAIN ELECTRICAL VALUE AT ACTUATORS — 708

NO — IDENTIFY SELECTION? — 710

YES

PROVIDE TACTILE FEEDBACK — 712

PERFORM ASSOCIATED FUNCTION — 714

FIG. 7

Mon, 20 Apr 2009

To: John
Cc: Bill

Subject: Long Weekend

Hi John,
How Are you?
We are getting all geared up for the upcoming long weekend and will need to decide on the supplies that we should be taking the quantity and who will be responsible for picking them up

| Q W | E R | T Y | U I | O P |
| A S | D F | G H | J K | L |
| Z X | C V | B N | M | ⏎ |
| ↑ | ,!? | SPACE | 123 | ← |

MENU

118

802

804

100

FIG. 8A

V

TOUCH LOCATION

FIG. 8B

# EP 2 328 065 A1

Europäisches
Patentamt

European
Patent Office

Office européen
des brevets

## EUROPEAN SEARCH REPORT

Application Number

EP 09 17 7523

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/057528 A1 (KLEEN MARTIN [DE]) 17 March 2005 (2005-03-17) | 1-10, 12-15 | INV. G06F3/041 G06F3/01 G06F3/048 |
| Y | * abstract * * paragraphs [0027], [0 31] * ----- | 11 | |
| X | US 2008/068348 A1 (ROSENBERG LOUIS B [US] ET AL) 20 March 2008 (2008-03-20) | 1-10, 12-15 | |
| Y | * abstract * * paragraphs [0058], [0 59], [0 69] * ----- | 11 | |
| X | US 2006/119586 A1 (GRANT DANNY A [CA] ET AL) 8 June 2006 (2006-06-08) | 1-10, 12-15 | |
| Y | * abstract * * paragraphs [0082], [0083], [0098], [0099] * ----- | 11 | |
| X | US 2002/033795 A1 (SHAHOIAN ERIK J [US] ET AL) 21 March 2002 (2002-03-21) | 1-10, 12-15 | |
| Y | * abstract * * paragraphs [0044], [0187], [0195], [0196] * ----- | 11 | TECHNICAL FIELDS SEARCHED (IPC) |
| X | US 2008/060856 A1 (SHAHOIAN ERIK J [US] ET AL) 13 March 2008 (2008-03-13) | 1-10, 12-15 | G06F |
| Y | * abstract * * paragraphs [0185], [0186], [0187], [0190], [0193] - [0196] * ----- | 11 | |
| X | EP 1 748 350 A2 (AVAGO TECHNOLOGIES GENERAL IP [SG]) 31 January 2007 (2007-01-31) | 1-2,4-15 | |
| Y | * abstract * * paragraph [0021] * ----- | 11 | |
| A | US 2006/209037 A1 (WANG DAVID [CA] ET AL) 21 September 2006 (2006-09-21) * abstract * * paragraphs [0034], [0035], [0037], [0038], [0044], [0046], [0051] * ----- | 1-15 | |

The present search report has been drawn up for all claims

| Place of search | Date of completion of the search | Examiner |
|---|---|---|
| Munich | 11 March 2010 | Schneider, Michael |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

14

**ANNEX TO THE EUROPEAN SEARCH REPORT
ON EUROPEAN PATENT APPLICATION NO.**

EP 09 17 7523

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2010

| Patent document cited in search report | | | Publication date | Patent family member(s) | | Publication date |
|---|---|---|---|---|---|---|
| US 2005057528 | A1 | | 17-03-2005 | DE | 10340188 A1 | 07-04-2005 |
| | | | | JP | 2005078644 A | 24-03-2005 |
| US 2008068348 | A1 | | 20-03-2008 | US | 2008068349 A1 | 20-03-2008 |
| | | | | US | 2008068350 A1 | 20-03-2008 |
| | | | | US | 2008068351 A1 | 20-03-2008 |
| US 2006119586 | A1 | | 08-06-2006 | NONE | | |
| US 2002033795 | A1 | | 21-03-2002 | NONE | | |
| US 2008060856 | A1 | | 13-03-2008 | US | 2008062143 A1 | 13-03-2008 |
| | | | | US | 2008062144 A1 | 13-03-2008 |
| | | | | US | 2008062145 A1 | 13-03-2008 |
| EP 1748350 | A2 | | 31-01-2007 | US | 2007024593 A1 | 01-02-2007 |
| | | | | US | 2010039403 A1 | 18-02-2010 |
| US 2006209037 | A1 | | 21-09-2006 | NONE | | |

EPO FORM P0459

For more details about this annex : see Official Journal of the European Patent Office, No. 12/82